# EUROPÄISCHE PATENTSCHRIFT

(11) **EP 1 037 021 B1**
(45) Veröffentlichungstag und Bekanntmachung des Hinweises auf die Patenterteilung: **19.01.2005**
(21) Anmeldenummer: 00101999.1
(22) Anmeldetag: 02.02.2000
(51) Int. Cl.: G01D 11/30, H02B 1/04

(54) **Vorrichtung zur Befestigung eines Sensors**
Device for mounting a sensor
Dispositif de fixation d'un capteur

(30) Priorität: 10.03.1999 DE 29904367 U
(43) Veröffentlichungstag der Anmeldung: 20.09.2000
(73) Patentinhaber: Festo AG & Co, 73734 Esslingen (DE)
(72) Erfinder: Waldmann, Dieter, 73061 Ebersbach (DE); Mödinger, Uwe, 73249 Wernau (DE); Merz, Heiko, 71364 Winnenden (DE)
(74) Vertreter: Abel, Martin, Dipl.-Ing.

(56) Entgegenhaltungen:
- DE-U- 9 414 869
- DE-U- 29 717 492
- GB-A- 2 317 919
- US-A- 5 457 384

## Beschreibung

Die Erfindung betrifft eine Vorrichtung zur Befestigung eines Sensors an einem Basiskörper, mit einer an dem Basiskörper vorgesehenen nutähnlichen Längsvertiefung, in die der Sensor mit einem Fußabschnitt einsetzbar ist, und mit einer Spanneinrichtung, durch die der Sensor zu seiner Befestigung mit der Innenfläche der Längsvertiefung verspannbar ist.

Eine Befestigungsvorrichtung dieser Art geht beispielsweise aus dem deutschen Gebrauchsmuster G 9414869.4 hervor. Sie kommt überwiegend im Zusammenhang mit fluidbetätigten Antrieben zum Einsatz, wobei das den Basiskörper bildende Gehäuse des Antriebes an der Außenseite über eine nutähnliche Längsvertiefung verfügt, in die der Sensor derart einsetzbar ist, daß er sich mit einem Fußabschnitt innerhalb der Längsvertiefung und mit einem Rückenabschnitt außerhalb der Längsvertiefung befindet. Die Spanneinrichtung enthält mehrere Spannelemente, die sich innerhalb der Längsvertiefung befinden und deren hinterschnittenen Querschnitt so beaufschlagen, daß der Fußabschnitt des Sensors mit der Innenfläche der Längsvertiefung verspannt wird.

Die zunehmende Miniaturisierung fluidbetätigter, aber auch elektrisch betätigter Antriebe macht die Befestigung von Sensoren, deren Baugröße sich nicht beliebig verringern läßt, zu einem Problem. Im gewünschten Montagebereich des Sensors steht oft nur eine sehr geringe Materialstärke des Basiskörpers zur Verfügung, die die Integration einer Verankerungsnut nach dem Vorbild der G 9414869.4 verhindert.

Es ist die Aufgabe der vorliegenden Erfindung, eine Vorrichtung zu schaffen, die auch bei kleinen Baugrößen des Basiskörpers eine leicht handhabbare und präzise Sensorbefestigung ermöglicht.

Zur Lösung dieser Aufgabe ist vorgesehen, daß sich die Spanneinrichtung komplett außerhalb der Längsvertiefung befindet, wobei sie zum einen am Basiskörper verankert ist und zum andern einen außerhalb der Längsvertiefung liegenden Rückenabschnitt des in die Längsvertiefung eingesetzten Sensors beaufschlagt.

Auf diese Weise läßt sich die Aufgabe der Längsvertiefung auf eine Zentrier- bzw. Ausrichtfunktion reduzieren, die bereits bei einer sehr geringen Nuttiefe gewährleistet werden kann und somit auch bei solchen Basiskörpern realisiert werden kann, die im fraglichen Bereich über eine nur geringe Materialstärke verfügen. Die die Haltekraft aufbringende Spanneinrichtung befindet sich vollständig außerhalb der Längsvertiefung und kann somit neben dieser an einer durch funktionstechnische Gegebenheiten des Basiskörpers nicht beeinträchtigten Stelle verankert werden. Von dort aus erstreckt sie sich in einen Bereich über dem Sensor und beaufschlagt dessen Rückenabschnitt in Richtung der Längsvertiefung, so daß der Sensor zwischen der Spanneinrichtung und der Innenfläche der Längsvertiefung sicher eingespannt ist. Vorzugsweise ist die Anordnung so getroffen, daß sich der Sensor vor dem endgültigen Fixieren der Spanneinrichtung relativ zu dieser in Erstreckungsrichtung der Längsvertiefung verstellen läßt, um ihn in der gewünschten Position zu justieren.

Vorteilhafte Weiterbildungen der Erfindung gehen aus den Unteransprüchen hervor. Da die Längsvertiefung selbst keine Verankerungsfunktion mehr zu übernehmen hat, kann ihre Querschnittskontur hinterschneidungsfrei ausgeführt werden, wobei beispielsweise eine flache, rinnenartige Ausgestaltung möglich ist.

Zweckmäßigerweise ist die Längsvertiefung mit derart geringer Tiefe ausgeführt, daß der befestigte Sensor mit weniger als der Hälfte seiner Höhe und vorzugsweise mit weniger als einem Drittel seiner Höhe in der Längsvertiefung aufgenommen ist.

Die Querschnittskontur der Längsvertiefung kann problemlos bei der Herstellung an die Außenkontor des Fußabschnittes des festzulegenden Sensors angepaßt werden. Auf diese Weise ist zum Beispiel ein Rechteckquerschnitt möglich oder auch eine konkav gekrümmte Ausführung, so daß sich ein einen Fußabschnitt mit konvexer Querschnittskontur aufweisender Sensor anbringen läßt.

Vor allem, wenn eine sehr flache Längsvertiefung zur Anwendung gelangt, die in Querrichtung keine oder nur ungenügende Abstützaufgaben übernehmen kann, ist es von Vorteil, wenn an der Spannvorrichtung zwei Stützflächen vorgesehen sind, zwischen die der Sensor mit seinem Rückenabschnitt eintaucht und von denen er in Querrichtung stabilisiert wird.

Die Spannvorrichtung enthält zweckmäßigerweise einen Spannbügel, der beispielsweise L-ähnlich oder U-ähnlich gestaltet sein kann und der seitlich neben der Längsvertiefung am Basiskörper festgelegt ist, wobei er den befestigten Sensor mit einem Spannabschnitt zumindest teilweise übergreift. Der Spannabschnitt kann hierbei ähnlich einem Kragarm frei endend über den Sensor hinweggreifen.

Zur Fixierung des Spannbügels am Basiskörper ist vorzugsweise eine Verankerungseinrichtung vorgesehen, die über am Spannbügel angreifende erste Verankerungsmittel verfügt, die mit am Basiskörper vorgesehenen zweiten Verankerungsmitteln so in Eingriff stehen, daß der Sensor die gewünschte Beaufschlagungskraft in Richtung der Längsvertiefung des Basiskörpers erfährt. Möglich ist dabei unter anderem eine Bauform, bei der der Spannbügel nur punktuell, also an einzelnen vorgegebenen Positionen entlang der Längsvertiefung verankerbar ist, wobei unter Umständen auch nur eine einzige Befestigungsstelle vorgesehen sein kann. Eine flexiblere Montage ist allerdings dann möglich, wenn die Verankerungseinrichtung eine variable, stufenlose Positionierung des Basiskörpers entlang der Längsvertiefung ermöglicht.

Nachfolgend wird die Erfindung anhand der beiliegenden Zeichnung näher erläutert. In dieser zeigen:
- Fig. 1: in perspektivischer Darstellung eine mögliche Bauform der erfindungsgemäßen Befestigungsvorrichtung in Verbindung mit einem fluidbetätigten Antrieb,
- Fig. 2: die Anordnung aus Fig. 1 in einer ausschnittsweisen Querschnittsdarstellung gemäß Schnittlinie II-II, wobei der Sensor ungeschnitten gezeigt ist, und
- Fig. 3: eine alternative Ausführungsform der Befestigungsvorrichtung in einer der Fig. 2 entsprechenden Darstellungsweise.

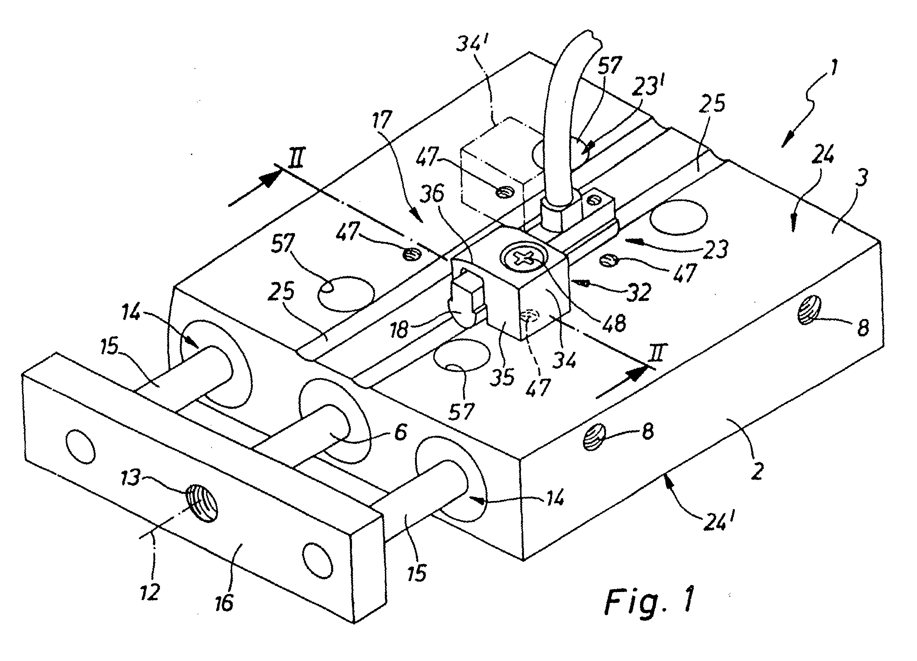

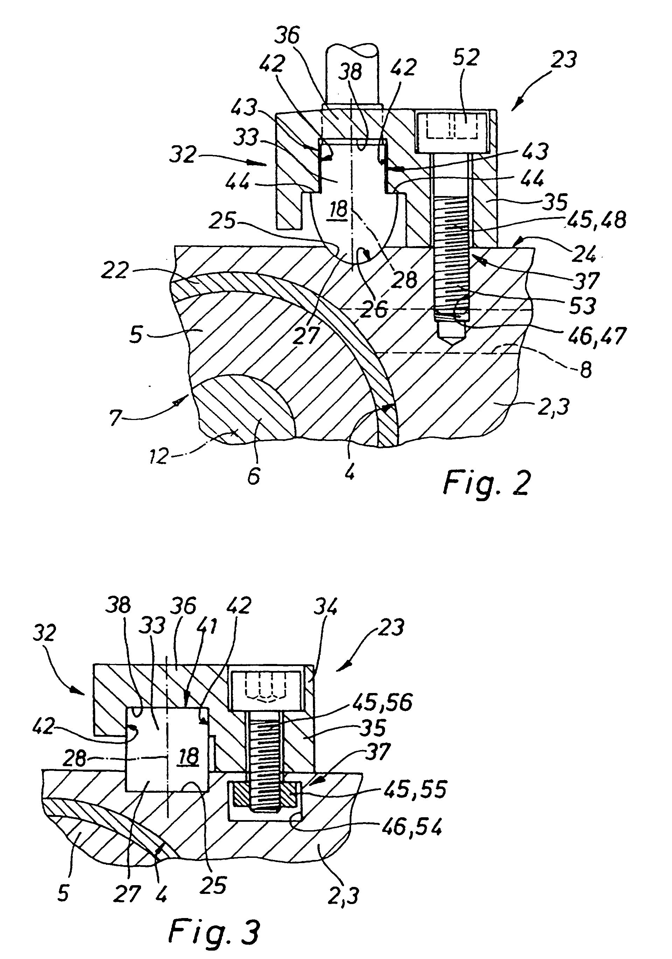

Die Fig. 1 zeigt exemplarisch einen durch Fluidkraft betätigbaren Antrieb 1, den man auch als Arbeitszylinder oder Linearantrieb bezeichnen könnte. Er verfügt über ein einen Basiskörper 2 bildendes Gehäuse 3, in dem, vorzugsweise im zentralen Bereich, ein sich in Längsrichtung erstreckender und zweckmäßigerweise zylindrisch konturierter Innenraum 4 ausgebildet ist. In diesem befindet sich gemäß Fig. 2 und 3 ein linear verschiebbarer Kolben 5, der mit einer stirnseitig aus dem Gehäuse 3 herausragenden Kolbenstange 6 fest verbunden ist. Letztere bildet zusammen mit dem Kolben 5 die allgemein mit Bezugsziffer 7 bezeichnete Abtriebseinheit des Antriebes 1.

Der Kolben 5 unterteilt den Innenraum 4 axial unter Abdichtung in zwei Arbeitsräume, die mit an der Außenfläche des Gehäuses 3 ausmündenden Fluidkanälen 8 in Verbindung stehen. Somit kann in an sich bekannter Weise durch gesteuerte Zufuhr und Abfuhr eines fluidischen Druckmediums, insbesondere Druckluft, eine Linearbewegung der Abtriebseinheit 7 in Richtung der Längsachse 12 des Innenraumes 4 hervorgerufen werden.

Die Linearbewegung der Abtriebseinheit 7 läßt sich am äußeren Endbereich der Kolbenstange 6 abgreifen. Aus diesem Grund sind ihr Befestigungsmittel 13 zugeordnet, die die Anbringung zu bewegender Bauteile ermöglichen. Beim Ausführungsbeispiel sind ferner zusätzlich zwei separate Linearführungseinrichtungen 14 vorhanden, die die auftretenden Querkräfte aufnehmen können und gleichzeitig eine Verdrehsicherung der Abtriebseinheit 7 bewirken können. Beim Ausführungsbeispiel enthält jede der Linearführungseinrichtungen 14, die auch nur einfach vorhanden sein können, eine sich parallel zur Kolbenstange 6 erstreckende Führungsstange 15, die in einem fest mit dem Gehäuse 3 verbundenen und vorzugsweise unmittelbar von dem Gehäuse 3 gebildeten Körper linear verschiebbar und in Querrichtung abgestützt geführt sind. Über ein Verbindungsteil 16 sind sie fest mit der Kolbenstange 6 bewegungsgekoppelt, wobei die Befestigungsmittel 13 an dem Verbindungsteil 16 vorgesehen sein können.

Der Antrieb 1 könnte auch in elektrisch betätigbarer Weise ausgeführt sein, ferner wäre eine kolbenstangenlose Bauform denkbar, wobei ein im Innenraum 4 vorhandener Bestandteil der Abtriebseinheit 7 beispielsweise über ein flexibles Zugmittel, einen einen Längsschlitz des Gehäuses durchsetzenden Mitnehmer oder berührungslos durch Magnetkopplung mit einem äußeren Bestandteil der Abtriebseinheit bewegungsgekoppelt ist.

Der Antrieb 1 ist mit einer allgemein mit Bezugsziffer 17 bezeichneten Positionserfassungseinrichtung ausgestattet, die es ermöglicht, zumindest eine, bei entsprechender Modifikation auch mehrere Relativpositionen zwischen der Abtriebseinheit 7 und dem vom Gehäuse 3 gebildeten Basiskörper 2 zu erfassen. Sie enthält mindestens einen Sensor 18, der seitlich neben dem Innenraum 4 an der Außenseite des Gehäuses 3 plaziert ist. Er wird durch ein an der Abtriebseinheit 7 und dabei vorzugsweise am Kolben 5 vorgesehenes Aktivierungselement 22 betätigt, wenn dieses im Rahmen der Hubbewegung der Abtriebseinheit 7 in den Nahbereich des Sensors 18 gelangt, und zwar insbesondere in einen dem Sensor 18 quer zur Hubrichtung gegenüberliegenden Bereich. Beim Ausführungsbeispiel ist der Sensor 18 von einem sogenannten Reed-Schalter gebildet, der auf ein Magnetfeld anspricht. Dementsprechend handelt es sich bei dem Aktivierungselement 22 um einen am Kolben 5 vorgesehenen Permanentmagneten, der hier als Ringmagnet ausgeführt ist.

Um auf kleine Baugrößen des Aktivierungselementes 22 zurückgreifen zu können, sollte der Sensor 18 mit möglichst geringem Radialabstand zu dem Innenraum 4 angeordnet sein. Dem steht bei dem abgebildeten Antrieb 1 an sich die sehr geringe Baugröße entgegen, die sich in einer sehr flachen Bauform des Gehäuses 3 äußert, so daß die Materialstärke des Gehäuses 3 in unmittelbarer Nachbarschaft des Innenraumes 4 zu gering ist, um beispielsweise nach dem Vorbild des deutschen Gebrauchsmusters G 9414869.4 eine hinterschnittene Verankerungsnut für den Sensor 18 einzubringen. Mit der erfindungsgemäßen Befestigungsvorrichtung 23 ist jedoch trotz der geringen Baugröße des Basiskörpers 2 eine problemlose und dennoch präzise Befestigung des Sensors 18 in unmittelbarer Nachbarschaft des Innenraumes 4 am Basiskörper 2 möglich.

Die Befestigungsvorrichtung 23, die beim Ausführungsbeispiel der Fig. 1 zweifach vorhanden ist, enthält eine in die Außenfläche 24 des Basiskörpers 2 bzw. vorliegend des Gehäuses 3 eingebrachte nutähnliche Längsvertiefung 25, die sich auf axialer Höhe des Innenraumes 4 über zumindest eine Teillänge des Hubbereiches des Kolbens 5 bzw. des Aktivierungselementes 22 erstreckt, wobei sie zugunsten einer einfachen Fertigung vorzugsweise über die gesamte Länge des Basiskörpers 2 durchgeht und zu beiden Stirnflächen des Basiskörpers 2 offen ist. Sie hat beim Ausführungsbeispiel eine rinnenartige Gestalt mit geringer Tiefe und enthält keinerlei Hinterschneidungen in ihrer Querschnittskontur.

Beim Ausführungsbeispiel der Fig. 2 ist die Innenfläche 26 der Längsvertiefung 25 im Querschnitt gesehen konkav kreisbogenähnlich gekrümmt, so daß sich ein etwa kreissegmentartiger Vertiefungsquerschnitt ergibt. Im Unterschied dazu ist die Querschnittsform der Längsvertiefung 25 beim Ausführungsbeispiel der Fig. 3 rechteckähnlich gehalten.

Der Sensor 18 hat eine längliche Gestalt und sitzt mit seinem dem Basiskörper 2 zugewandten Umfangsabschnitt, der als Fußabschnitt 27 bezeichnet sei, in der Längsvertiefung 25 ein. Dieser Fußabschnitt 27 verfügt über eine zum Querschnitt der Längsvertiefung komplementäre Querschnittskontur, was einen zumindest weitestgehend spielfreien Kontakt mit der Innenfläche 26 der Längsvertiefung 25 gestattet. Dementsprechend ist der Fußabschnitt 27 beim Ausführungsbeispiel der Fig. 2 konvex konturiert und im Falle der Ausführungsform gemäß Fig. 3 mit einer rechteckförmigen Außenkontur versehen.

Die Längsvertiefung 25 hat keine Verankerungsfunktion, sondern dient lediglich zur Vorgabe einer bestimmten Ausrichtung des Sensors 18 mit Bezug zum Basiskörper 2. Der größte Teil des Sensorquerschnittes befindet sich somit außerhalb des Basiskörpers 2, wobei im Falle der Ausführungsbeispiele eine derartige Abstimmung der Abmessungen vorhanden ist, daß der befestigte Sensor mit weniger als der Hälfte seiner in Tiefenrichtung der Längsvertiefung 25 gemessenen Bauhöhe und vorzugsweise mit weniger als einem Drittel seiner Bauhöhe in der Längsvertiefung 25 aufgenommen ist. Die Höhenrichtung des Sensors 18 ist in Fig. 2 und 3 durch eine mit Bezugsziffer 28 bezeichnete strichpunktierte Linie verdeutlicht.

Zur festen Fixierung des Sensors 18 am Basiskörper 2 ist die Befestigungsvorrichtung 23 mit einer Spanneinrichtung 32 ausgestattet, die sich komplett außerhalb der besagten Längsvertiefung 25 befindet, wobei sie einerseits am Basiskörper 2 verankert ist und andererseits die als Rückenabschnitt 33 bezeichnete, außerhalb der Längsvertiefung 25 befindliche Sensorpartie in Richtung zur Längsvertiefung 25 beaufschlagt. Der Sensor 18 wird dadurch mit der Innenfläche 26 der Längsvertiefung 25 verspannt und gehäusefest fixiert. Da die gehäuseseitige Verankerung der Spanneinrichtung 32 nicht auf eine bestimmte Nähe zu dem Innenraum 4 angewiesen ist, können die entsprechenden Verankerungsmaßnahmen an geeigneter Stelle seitlich neben der Längsvertiefung 25 vorgesehen werden, wo gemäß Fig. 2 und 3 genügend Material des Basiskörpers 2 zur Verfügung steht, um die notwendige Festigkeit zu gewährleisten.

Zweckmäßigerweise enthält die Spanneinrichtung einen vorzugsweise einstückigen Spannbügel 34, der einen im montierten Zustand den Sensor 18 längsseits flankierenden Befestigungsabschnitt 35 und einen sich an diesen anschließende, den Rückenabschnitt 33 auf der der Längsvertiefung 25 entgegengesetzten Oberseite zumindest teilweise übergreifenden Spannabschnitt 36 aufweist. Der Befestigungsabschnitt 35 ist durch eine Verankerungseinrichtung 37 fest mit dem Basiskörper 2 verspannbar, was zur Folge hat, daß der Rückenabschnitt 33 des Sensors 18 vom Spannabschnitt 36 des Spannbügels 34 parallel zur Höhenrichtung 28 beaufschlagt und in die Längsvertiefung 25 hineingedrückt wird.

Damit der Sensor 18 nicht verkippen kann, greift er mit seinem Rückenabschnitt 33 in eine an der der Längsvertiefung 25 zugewandten Unterseite des Spannabschnittes 36 vorgesehene Haltevertiefung 38 ein, deren sich in Querrichtung des Sensors 18 gegenüberliegende seitliche Nutflanken Stützflächen 42 bilden, an denen der Rückenabschnitt 33 mit einander entgegengesetzt orientierten längsseitigen Außenflächenabschnitten 43 in Kontakt steht. Auf diese Weise erfolgt mit Höhenabstand zur Längsvertiefung 25 eine Querabstützung des Sensors 18, was ein Verkippen ausschließt.

Aus Fig. 2 und 3 ist gut ersichtlich, daß der Spannabschnitt 36 vorzugsweise kragarmähnlich ausgebildet ist und mit seinem dem Befestigungsabschnitt 25 entgegengesetzten Endbereich ohne Kontakt zum Basiskörper 2 frei endet. Dabei kann der Spannbügel 34 eine insgesamt L-ähnliche Gestalt oder auch die aus der Zeichnung ersichtliche, annähernd U-förmige Gestalt aufweisen, je nachdem, wie weit der Sensor 18 vom Spannabschnitt 36 übergriffen wird und wie weit der den Sensor 18 vollständig übergreifende Spannabschnitt 36 sich auf der dem Befestigungsabschnitt 35 entgegengesetzten Seite zur Außenfläche 24 des Basiskörpers 2 erstreckt.

Während beim Ausführungsbeispiel der Fig. 3 die übertragung der Spannkräfte zwischen dem Spannabschnitt 36 und dem Sensor 38 unmittelbar durch Beaufschlagung der der Längsvertiefung 25 entgegengesetzten oberen Abschlußfläche 41 des Sensors 18 erfolgt, arbeitet im Falle der Fig. 2 der Spannabschnitt 36 mit an den beiden Längsseiten des Rückenabschnittes 33 vorgesehenen Sensorflächen 44 zusammen, die aus einer abgestuften Konturierung des Sensorgehäuses resultieren.

Die schon erwähnte Verankerungseinrichtung 37 verfügt über am Spannbügel 34 angreifende erste Verankerungsmittel 45, die mit am Basiskörper 2 vorgesehenen zweiten Verankerungsmitteln 46 derart in Eingriff bringbar sind, daß zumindest der Spannabschnitt 36 des Spannbügels 34 unter Beaufschlagung des Sensors 18 zum Basiskörper 2 herangezogen wird.

Beim Ausführungsbeispiel der Fig. 1 und 2 ist die Verankerungseinrichtung 37 so ausgeführt, daß der Spannbügel 34 punktuell an unterschiedlichen Stellen entlang der Längsvertiefung 25 wahlweise festlegbar ist. Zu diesem Zweck enthalten die zweiten Verankerungsmittel 46 mehrere entlang der Längsvertiefung 25 mit Querabstand zu dieser verteilt angeordnete Gewindebohrungen 47 im Basiskörper 2, und die ersten Verankerungsmittel 45 sind als Verankerungsschraube 48 ausgeführt, die sich mit ihrem Kopf 52 am Spannbügel 34 abstützt und mit ihrem Gewindeteil 53 in wahlweise eine der Gewindebohrungen 47 einschraubbar ist. Durch Anziehen der Verankerungsschraube 48 wird der Spannbügel 34 zum Basiskörper 2 gezogen und gleichzeitig der Spannabschnitt 36 gegen den Sensor 18 gedrückt. Dabei versteht es sich, daß der von der Verankerungsschraube 48 durchsetzte Befestigungsabschnitt 35 des Spannbügels 34 in seinen Abmessungen so gewählt ist, daß die auf den Sensor 18 auszuübende Beaufschlagungskraft spätestens dann erreicht wird, wenn der Befestigungsabschnitt 35 an der Außenfläche 24 des Basiskörpers 2 zur Anlage kommt..Speziell in diesem Zusammenhang kann es von Vorteil sein, wenn der Spannabschnitt 36 elastisch biegbar mit dem Befestigungsabschnitt 35 verbunden ist, so daß die Fixierung des Sensors 18 unter gleichzeitiger, zumindest geringfügiger federelastischer Verformung des Spannbügels 34 erfolgt.

Ist für die Justierung des Sensors 18 ein großer Verstellbereich nicht erforderlich, ist eine einzige Gewindebohrung 47 in der Regel ausreichend. Zumal der Spannbügel 34 zumindest im Bereich des Spannabschnittes 36 gemäß Fig. 1 über eine in der Regel im Vergleich zur Länge des Sensors 18 geringere Baubreite verfügt, so daß der Sensor 18 vor dem endgültigen Festziehen der Verankerungseinrichtung 37 durch Verschieben relativ zum Basiskörper 2 und zum Spannbügel 34 längs der Längsvertiefung 25 in die gewünschte Position verbracht werden kann.

Die aus Fig. 3 ersichtliche Verankerungseinrichtung 37 ist so ausgeführt, daß der Spannbügel 34 entlang der Längsvertiefung 25 stufenlos positionierbar ist, was variablere Einstellungen ermöglicht. Die zweiten Verankerungsmittel 46 sind in diesem Falle von wenigstens einer sich mit Parallelabstand neben der Längsvertiefung 25 erstreckenden Verankerungsnut 54 gebildet, die eine hinterschnittene Querschnittskontur aufweist, so daß sie zur Fixierung eines Nutensteins 55 geeignet ist. Letzterer ist Bestandteil der ersten Verankerungsmittel 45 und steht in Schraubverbindung mit einer sich am Spannbügel 34 abstützenden Spannschraube 56. Bei gelöster Spannschraube 56 läßt sich der Spannbügel 34 entlang der Längsvertiefung 25 bis zur gewünschten Position verschieben, um hernach durch Festziehen der Spannschraube 56 den Nutenstein 55 mit der Innenfläche der Verankerungsnut 54 zu verspannen und dadurch den Spannabschnitt 36 unter Klemmung des Sensors 18 an den Basiskörper 2 heranzuziehen.

Es wären auch Bauformen möglich, bei denen die Verankerungseinrichtung 37 so ausgeführt ist, daß eine verrastende Verbindung zwischen dem Spannbügel 34 und dem Basiskörper 2 erfolgt.

Sofern es die konstruktiven Gegebenheiten des Basiskörpers 2 zulassen, könnten beidseits der Längsvertiefung 25 zweite Verankerungsmittel vorgesehen werden, die sich gleichzeitig oder alternativ zur Befestigung eines Sensors verwenden lassen.

Bei dem in Fig. 1 gezeigten Ausführungsbeispiel verfügt der Basiskörper 2 über eine sehr geringe Bauhöhe. Der Abstand zwischen den beiden die Bauhöhe vorgebenden Außenflächen 24, 24' ist nur geringfügig größer als der Durchmesser des Innenraumes 4. In direkter Draufsicht auf die mit der Längsvertiefung 25 ausgestattete Außenfläche 24 gesehen, ist hierbei die Längsvertiefung 25 mit Parallelabstand versetzt zur Längsachse 12 des Innenraumes 4 angeordnet. Die Verankerungseinrichtung 37 befindet sich auf der der Längsachse 12 entgegengesetzten Längsseite der Längsvertiefung 25, so daß sich letztere, in Draufsicht auf die Außenfläche 24 gesehen, zwischen der Verankerungseinrichtung 37 und der Längsachse 12 befindet.

Eine zweite Befestigungsvorrichtung 23' ist spiegelbildlich zu einer die Längsachse 12 enthaltenden und rechtwinkelig zur Außenfläche 24 ausgerichteten Ebene angeordnet, wobei in Fig. 1 bei 34' ein Spannbügel der zweiten Befestigungsvorrichtung 23' schematisch angedeutet ist. Vorteilhaft ist hierbei, daß sich zwei Sensoren unabhängig von ihrer Baulänge auch in einer axial überlappenden Konstellation positionieren lassen.

In Fig. 1 sind bei 57 noch verschiedene, den Basiskörper 2 durchsetzende Befestigungslöcher angedeutet, die verwendet werden können, um den Basiskörper 2 an einer beliebigen Tragstruktur zu verankern.

## Patentansprüche

1. Vorrichtung zur Befestigung eines Sensors an einem Basiskörper, mit einer an dem Basiskörper (2) vorgesehenen nutähnlichen Längsvertiefung (25), in die der Sensor (18) mit einem Fußabschnitt (27) einsetzbar ist, und mit einer Spanneinrichtung (32), durch die der Sensor (18) zu seiner Befestigung mit der Innenfläche (26) der Längsvertiefung (25) verspannbar ist, **dadurch gekennzeichnet, daß** sich die Spanneinrichtung (32) komplett außerhalb der Längsvertiefung (25) befindet, wobei sie zum einen am Basiskörper (2) verankert ist und zum andern einen außerhalb der Längsvertiefung (25) liegenden Rückenabschnitt (33) des in die Längsvertiefung (25) eingesetzten Sensors (18) beaufschlagt.

2. Vorrichtung nach Anspruch 1, **dadurch gekennzeichnet, daß** die Querschnittskontur der Längsvertiefung (25) hinterschneidungsfrei ausgeführt ist.

3. Vorrichtung nach Anspruch 1 oder 2, **dadurch gekennzeichnet, daß** die Längsvertiefung (25) rinnenartig ausgebildet ist.

4. Vorrichtung nach einem der Ansprüche 1 bis 3, **dadurch gekennzeichnet, daß** die Längsvertiefung (25) mit derart geringer Tiefe ausgeführt ist, daß der befestigte Sensor (18) mit weniger als der Hälfte seiner Höhe und vorzugsweise mit weniger als einem Drittel seiner Höhe in der Längsvertiefung (25) aufgenommen ist.

5. Vorrichtung nach einem der Ansprüche 1 bis 4, **dadurch gekennzeichnet, daß** die Innenfläche (26) der Längsvertiefung (25) im Querschnitt konkav gekrümmt ist, wobei der zugeordnete Fußabschnitt (27) des Sensors (18) eine komplementäre konvexe Querschnittskontur aufweist.

6. Vorrichtung nach einem der Ansprüche 1 bis 5, **dadurch gekennzeichnet, daß** der Rückenabschnitt (33) des befestigten Sensors (18) zwischen zwei zur Querabstützung vorgesehene Stützflächen (42) der Spanneinrichtung (32) eingreift.

7. Vorrichtung nach einem der Ansprüche 1 bis 6, **dadurch gekennzeichnet, daß** die Spanneinrichtung (32) einen Spannbügel (34) aufweist, der seitlich neben der Längsvertiefung (25) am Basiskörper (2) festlegbar ist und den befestigten Sensor (18) mit einem dessen Rückenabschnitt (33) in Tiefenrichtung der Längsvertiefung (25) beaufschlagenden Spannabschnitt (36) zumindest teilweise übergreift.

8. Vorrichtung nach Anspruch 7, **dadurch gekennzeichnet, daß** der Spannbügel (34) auf lediglich einer Seite der Längsvertiefung (25) am Basiskörper (2) festgelegt ist, wobei der Spannabschnitt (36) den Sensor (18) kragarmähnlich zumindest teilweise übergreift.

9. Vorrichtung nach Anspruch 7 oder 8 in Verbindung mit Anspruch 6, **dadurch gekennzeichnet, daß** die beiden Stützflächen (42) an den sich gegenüberliegenden Seitenflächen einer am Spannabschnitt (36) des Spannbügels (34) vorgesehenen und den Rückenabschnitt (33) des befestigten Sensors (18) übergreifenden nutartigen Haltevertiefung (38) vorgesehen sind.

10. Vorrichtung nach einem der Ansprüche 7 bis 9, **gekennzeichnet durch** eine zur lösbaren Verankerung des Spannbügels (34) am Basiskörper (2) dienende Verankerungseinrichtung (37), die über am Spannbügel (34) angreifende erste Verankerungsmittel (45) verfügt, welche mit am Basiskörper (2) vorgesehenen zweiten Verankerungsmitteln derart in Eingriff bringbar sind, daß zumindest der Spannabschnitt (36) des Spannbügels (34) zum Basiskörper (2) herangezogen wird.

11. Vorrichtung nach Anspruch 10, **dadurch gekennzeichnet, daß** die Verankerungseinrichtung (37) so ausgeführt ist, daß der Spannbügel (34) an zumindest einer Stelle und vorzugsweise an mehreren punktuell entlang der Längsvertiefung (25) verteilten Stellen am Basiskörper (2) festlegbar ist.

12. Vorrichtung nach Anspruch 11, **dadurch gekennzeichnet, daß** die zweiten Verankerungsmittel (46) von zumindest einer Gewindebohrung (47) gebildet sind, in die eine die ersten Verankerungsmittel (45) bildende Verankerungsschraube (48) einschraubbar ist.

13. Vorrichtung nach Anspruch 10, **dadurch gekennzeichnet, daß** die Verankerungseinrichtung so ausgeführt ist, daß der Spannbügel (34) stufenlos in unterschiedlichen Positionen entlang der Längsvertiefung (25) am Basiskörper (2) festlegbar ist.

14. Vorrichtung nach Anspruch 13, **dadurch gekennzeichnet, daß** die zweiten Verankerungsmittel (46) von zumindest einer sich mit Abstand parallel zur Längsvertiefung (25) erstreckenden und einen hinterschnittenen Querschnitt aufweisenden Verankerungsnut (54) gebildet sind, in die die ersten Verankerungsmittel (45) eingreifen können.

15. Vorrichtung nach einem der Ansprüche 10 bis 14, **dadurch gekennzeichnet, daß** der Spannbügel (34) einen sich an den Spannabschnitt (36) anschließenden, den befestigten Sensor (18) seitlich flankierenden Befestigungsabschnitt (35) aufweist, der über die Verankerungseinrichtung (37) am Basiskörper (2) fixiert ist.

16. Vorrichtung nach einem der Ansprüche 10 bis 15, **dadurch gekennzeichnet, daß** die Verankerungseinrichtung (37) über beidseits der Längsvertiefung (25) vorgesehene zweite Verankerungsmittel (46) verfügt, die gleichzeitig oder alternativ zur Befestigung eines Sensors (18) verwendbar sind.

17. Vorrichtung nach einem der Ansprüche 1 bis 16, **dadurch gekennzeichnet, daß** der Basiskörper (2) von einem Gehäuse (3) gebildet ist, das einen Innenraum (4) enthält, in dem sich ein zur berührungslosen Betätigung des Sensors (18) geeignetes bewegliches Aktivierungselement (22) befindet.

18. Vorrichtung nach Anspruch 17, **dadurch gekennzeichnet, daß** das Gehäuse (3) Bestandteil eines fluidisch oder elektrisch betätigten Antriebes (1) ist, wobei das Aktivierungselement (22) an der beweglichen Abtriebseinheit (7) des Antriebes (1), beispielsweise ein Kolben (5), vorgesehen ist.

19. Vorrichtung nach Anspruch 17 oder 18, **dadurch gekennzeichnet, daß** sich die Längsvertiefung (25) in Bewegungsrichtung des Aktivierungselements (22) entlang des Innenraums (4) erstreckt.

## Claims

1. Device for fastening a sensor to a base body, comprising a groove-like longitudinal recess (25) provided on the base body (2), into which recess the sensor (18) comprising a foot portion (27) may be inserted, and comprising a tensioning device (32), by means of which the sensor (18) may be tensioned in order to be fastened to the inner surface (26) of the longitudinal recess (25), **characterised in that** the tensioning device (32) is located entirely outside the longitudinal recess (25), said tensioning device being anchored on the base body (2), on the one hand, and acting on a back portion (33), located outside the longitudinal recess (25), of the sensor (18) inserted into the longitudinal recess (25), on the other hand.

2. Device according to claim 1, **characterised in that** the sectional contour of the longitudinal recess (25) is configured without undercuts.

3. Device according to either claim 1 or claim 2, **characterised in that** the longitudinal recess (25) is formed. in the manner of a trough.

4. Device according to any one of claims 1 to 3, **characterised in that** the longitudinal recess (25) is sufficiently shallow that less than half of the height of the fastened sensor (18), and preferably less than one third of said height, is received in the longitudinal recess (25).

5. Device according to any one of claims 1 to 4, **characterised in that** the inner surface (26) of the longitudinal recess (25) is curved in a concave fashion in section, the associated foot portion (27) of the sensor (18) having a complementary convex sectional contour.

6. Device according to any one of claims 1 to 5, **characterised in that** the back portion (33) of the fastened sensor (18) engages between two bearing surfaces (42) of the tensioning device (32) that are provided for transverse support.

7. Device according to any one of claims 1 to 6, **characterised in that** the tensioning device (32) comprises a tension clamp (34), which may be fixed laterally next to the longitudinal recess (25) on the base body (2) and at least partially overlaps the fastened sensor (18) with a tension portion (36) acting on the back portion (33) of said sensor in the direction of the depth of the longitudinal recess (25).

8. Device according to claim 7, **characterised in that** the tension clamp (34) is fixed to the base body (2) only on one side of the longitudinal recess (25), the tension portion (36) at least partially overlapping the sensor (18) in the manner of a cantilever.

9. Device according to either claim 7 or claim 8, in conjunction with claim 6, **characterised in that** the two bearing surfaces (42) are provided on the opposing lateral surfaces of a groove-like holding recess (38) that is provided on the tension portion (36) of the tension clamp (34) and overlaps the back portion (33) of the fastened sensor (18).

10. Device according to any one of claims 7 to 9, **characterised by** an anchoring device (37) that serves to anchor the tension clamp (34) on the base body (2) in a detachable manner and possesses first anchoring means (45) that act on the tension clamp (34) and may be brought into engagement with second anchoring means provided on the base body (2) such that at least the tension portion (36) of the tension clamp (34) is drawn toward the base body (2).

11. Device according to claim 10, **characterised in that** the anchoring device (37) is constructed such that the tension clamp (34) may be fixed to the base body (2) at at least one point and preferably at a plurality of points distributed in various places along the longitudinal recess (25).

12. Device according to claim 11, **characterised in that** the second anchoring means (46) are formed by at least one threaded hole (47), into which an anchoring screw (48) forming the first anchoring means (45) may be screwed.

13. Device according to claim 10, **characterised in that** the anchoring device is constructed such that the tension clamp (34) may be fixed to the base body (2) continuously in different positions along the longitudinal recess (25).

14. Device according to claim 13, **characterised in that** the second anchoring means (46) are formed by at least one anchoring groove (54) extending at a distance parallel to the longitudinal recess (25) and exhibiting an undercut cross section, with which groove the first anchoring means (45) may engage.

15. Device according to any one of claims 10 to 14, **characterised in that** the tension clamp (34) comprises a fastening portion (35) that is adjacent to the tension portion (36), laterally flanks the fastened sensor (18) and is fixed to the base body (2) via the anchoring device (37).

16. Device according to any one of claims 10 to 15, **characterised in that** the anchoring device (37) possesses second anchoring means (46) that are provided on both sides of the longitudinal recess (25) and may be used simultaneously or alternately for fastening a sensor (18).

17. Device according to any one of claims 1 to 16, **characterised in that** the base body (2) is formed by a housing (3) that contains an interior space (4) in which a movable activating element (22) that is suitable for actuating the sensor (18) in a non-contact manner is located.

18. Device according to claim 17, **characterised in that** the housing (3) is a constituent element of a fluidically or electrically actuated drive (1), the activating element (22) being provided on the movable drive unit (7) of the drive (1), for example a piston (5).

19. Device according to either claim 17 or claim 18, **characterised in that** the longitudinal recess (25) extends along the interior space (4) in the direction of movement of the activating element (22).

## Revendications

1. Dispositif de fixation d'un capteur sur un corps de base, avec un renfoncement longitudinal (25) semblable à une rainure prévu sur le corps de base (2), le capteur (18) étant insérable avec une section de base (27) dans ledit renfoncement longitudinal (25), et avec un dispositif de serrage (32), grâce auquel le capteur (18) peut être haubané jusqu'à sa fixation avec la surface intérieure (26) du renfoncement longitudinal (25), **caractérisé en ce que** le dispositif de serrage (32) se trouve intégralement à l'extérieur du renfoncement longitudinal (25), ledit dispositif de serrage (32) étant ancré, d'une part, sur le corps de base (2) et admettant, d'autre part, une section dorsale (33) du capteur (18) inséré dans le renfoncement longitudinal (25) se trouvant à l'extérieur du renfoncement longitudinal (25).

2. Dispositif selon la revendication 1, **caractérisé en ce que** le contour de la section transversale du renfoncement longitudinal (25) est réalisé sans contre-dépouille.

3. Dispositif selon la revendication 1 ou 2, **caractérisé en ce que** le renfoncement longitudinal (25) est réalisé sous forme de rainure.

4. Dispositif selon l'une quelconque des revendications 1 à 3, **caractérisé en ce que** le renfoncement longitudinal (25) est réalisé avec une profondeur réduite de telle manière que le capteur fixé (18) est logé avec moins de la moitié de sa hauteur et, de préférence, avec moins d'un tiers de sa hauteur dans le renfoncement longitudinal (25).

5. Dispositif selon l'une quelconque des revendications 1 à 4, **caractérisé en ce que** la surface intérieure (26) du renfoncement longitudinal (25) est courbée de manière concave dans la section transversale, la section de base (27) correspondante du capteur (18) présentant un contour de section transversale convexe complémentaire.

6. Dispositif selon l'une quelconque des revendications 1 à 5, **caractérisé en ce que** la section dorsale (33) du capteur fixé (18) engrène entre deux surfaces d'appui (42) du dispositif de serrage (32) prévues en vue de l'étaiement transversal.

7. Dispositif selon l'une quelconque des revendications 1 à 6, **caractérisé en ce que** le dispositif de serrage (32) présente une bride de fixation (34) qui peut être fixée latéralement à côté du renfoncement longitudinal (25) sur le corps de base (2) et qui chevauche au moins en partie le capteur fixé (18) avec une section de serrage (36) admettant sa section dorsale (33) dans le sens de la profondeur du renfoncement longitudinal (25).

8. Dispositif selon la revendication 7, **caractérisé en ce que** la bride de fixation (34) est fixée sur le corps de base (2) uniquement sur un côté du renfoncement longitudinal (25), la section de serrage (36) chevauchant au moins en partie le capteur (18) de manière semblable à un porte-à-faux.

9. Dispositif selon la revendication 7 ou 8 en relation avec la revendication 6, **caractérisé en ce que** les deux surfaces d'appui (42) sont prévues sur les surfaces latérales se faisant face d'un renfoncement de retenue (38) de type rainure prévu sur la section de serrage (36) de la bride de fixation (34) et chevauchant la section dorsale (33) du capteur fixé (18).

10. Dispositif selon l'une quelconque des revendications 7 à 9, **caractérisé par** un dispositif d'ancrage (37) servant à l'ancrage amovible de la bride de fixation (34) sur le corps de base (2), ledit dispositif d'ancrage (37) disposant de premiers moyens d'ancrage (45) ayant prise sur la bride de fixation (34), lesquels peuvent être mis en prise avec des seconds moyens d'ancrage prévus sur le corps de base (2) de telle manière qu'au moins la section de serrage (36) de la bride de fixation (34) est tirée vers le corps de base (2).

11. Dispositif selon la revendication 10, **caractérisé en ce que** le dispositif d'ancrage (37) est réalisé de manière à ce que la bride de fixation (34) soit fixable sur le corps de base (2) au niveau d'au moins un emplacement et, de préférence, sur plusieurs emplacements répartis ponctuellement le long du renfoncement longitudinal (25).

12. Dispositif selon la revendication 11, **caractérisé en ce que** les seconds moyens d'ancrage (46) sont formés par au moins un alésage fileté (47) dans lequel une vis d'ancrage (48) formant les premiers moyens d'ancrage (45) peut être vissée.

13. Dispositif selon la revendication 10, **caractérisé en ce que** le dispositif d'ancrage est réalisé de manière à ce que la bride de fixation (34) soit fixable progressivement sur le corps de base (2) dans différentes positions le long du renfoncement longitudinal (25).

14. Dispositif selon la revendication 13, **caractérisé en ce que** les seconds moyens d'ancrage (46) sont formés par au moins une rainure d'ancrage (54) s'étendant de manière éloignée parallèlement au renfoncement longitudinal (25) et présentant une section transversale contre-dépouillée, dans laquelle les premiers moyens d'ancrage (45) peuvent engrener.

15. Dispositif selon l'une quelconque des revendications 10 à 14, **caractérisé en ce que** la bride de fixation (34) présente une section de fixation (35) attenante à la section de serrage (36) et flanquant latéralement le capteur fixé (18), ladite section de fixation (35) étant fixée sur le corps de base (2) via le dispositif d'ancrage (37).

16. Dispositif selon l'une quelconque des revendications 10 à 15, **caractérisé en ce que** le dispositif d'ancrage (37) dispose de seconds moyens d'ancrage (46) prévus des deux côtés du renfoncement longitudinal (25), lesdits seconds moyens d'ancrage (46) étant utilisables simultanément ou alternativement en vue de la fixation d'un capteur (18).

17. Dispositif selon l'une quelconque des revendications 1 à 16, **caractérisé en ce que** le corps de base (2) est formé par un boîtier (3) qui comporte un espace intérieur (4) dans lequel se trouve un élément d'activation mobile (22) approprié à l'actionnement sans contact du capteur (18).

18. Dispositif selon la revendication 17, **caractérisé en ce que** le boîtier (3) fait partie d'une commande (1) actionnée fluidiquement ou électriquement, l'élément d'activation (22) étant prévu au niveau de l'unité motrice mobile (7) de la commande (1), par exemple un piston (5).

19. Dispositif selon la revendication 17 ou 18, **caractérisé en ce que** le renfoncement longitudinal (25) s'étend dans le sens de mouvement de l'élément d'activation (22) le long de l'espace intérieur (4).
